Europäisches Patentamt

European Patent Office

Office européen des brevets

(19)

(11)  EP 1 708 172 A1

(12)  EUROPEAN PATENT APPLICATION

(43)  Date of publication:
     04.10.2006  Bulletin 2006/40

(51)  Int Cl.:
     G10L 17/00 (2006.01)

(21)  Application number: 05006839.4

(22)  Date of filing: 30.03.2005

(84)  Designated Contracting States:
     AT BE BG CH CY CZ DE DK EE ES FI FR GB GR
     HU IE IS IT LI LT LU MC NL PL PT RO SE SI SK TR
     Designated Extension States:
     AL BA HR LV MK YU

(71)  Applicant: Top Digital Co., Ltd.
     Hsichih City
     Taipei Hsien
     Taiwan (CN)

(72)  Inventors:
     • Yu, Kun-Lang
       Keelung
       Taiwan (CN)

     • Cheng, Andy
       Ta-An District
       Taipei
       Taiwan (CN)
     • Ouyang, Yen-Chieh
       Taichung
       Taiwan (CN)

(74)  Representative: LOUIS, PÖHLAU, LOHRENTZ
     P.O. BOX 30 55
     90014 Nürnberg (DE)

(54)  **Voiceprint identification system for E-commerce**

(57)  A voiceprint identification method for transacting e-commerce includes the steps of: accessing user's login via electronic communication means; an identification device recognizing a password; the identification device verifying voiceprint registration of users whether a voiceprint of the assessed user is registered; a voiceprint identification system identifying the assessed user's login or approving registration of a voiceprint of the user; and the voiceprint identification system determining the user to approve or disapprove in transacting e-commerce.

FIG. 1

**Description**

BACKGROUND OF THE INVENTION

1. Field of the Invention

The present invention relates to a voiceprint identification system for e-commerce. More particularly, the present invention relates to the voiceprint identification system for e-commerce combining with Gauss Probability Distribution, Dynamic Time Warping Algorithm and Hidden Marko Model, and further employing Viterbi Algorithm to obtain a maximum similar path so as to calculate model parameters for the voiceprint identification system.

2. Description of the Related Art

Taiwanese Patent Publication No. 385416, entitled "electronic commerce system," discloses an electronic commerce system providing for archiving safety for a transaction log on a network. The commerce system includes: a session key creator used to create a session key for encrypting the transaction log; an encryptor used to encrypt the transaction log with the session key; and a transmitter used to transmit the encrypted transaction log to an archiving server across the network. However, the session key creator and the encryptor disclosed in TWN385416 are not used to recognize or identify a user, but only deployed to encrypt and store the transaction log.

Taiwanese Patent Publication No. 550477, entitled "method, system and computer readable medium for website account and e-commerce management from a central location," discloses a managing method for an on-line (central website) financial transaction with a user on a destination website. The managing method includes the steps of: registering a user on a destination website; the central website generating a unique username and a unique password; the user using the username and the password to register on one or more destination websites; transmitting a readiness command to a financial institution for start using an account of a user's credit card or a user's charge card; transmitting a request from the destination website to the financial institution for paying from the account of the credit card or the charge card while approving the account of the credit card or the charge card; and transmitting a revocation command to the financial institution for disapproving the account of the user's credit card or the user's charge card; wherein the financial institution receiving and processing the request from the destination website when the account of the credit card or the charge card being in approving state; and wherein the financial institution refusing the request from the destination website when the account of the credit card or the charge card being in disapproving state. However, the managing method disclosed in TWN550477 only employs the username and the password for identifying the user, and the username and the password may be leaked or embezzled.

However, there is a need for improving the electronic commerce system of TWN385416 and the managing method of TWN550477 so as to effectively identifying a user.

As to a voiceprint identification method, Taiwanese Patent Publication No. 490655, entitled "sound spectrum identification method and apparatus thereof," discloses employing unique information of sound spectrum to identify a variety of users for recognizing authorization. The voiceprint identification method includes the steps of: a. detecting a terminal point of a user's speech voice after reading; b. retrieving voice features from the sound spectrum of the user's speech voice; c. determining whether a training being required, collecting a specimen of the sound spectrum if required, and proceeding to the next step if not required; d. comparing the voice features of the sound spectrum with reference specimens; e. calculating distances of gaps between the voice features and the reference specimens according to the compared results; f. comparing the calculated results with predetermined boundaries; discriminating from the compared results of the user's speech voice for identifying an authorized user. The identification method disclosed in TWN490655 is applied to a cellular phone, wherein retrieving voice features from unique information of sound spectrum to thereby identify a phone user.

The identification method disclosed in TWN490655 mainly employs comparing user's predetermined boundaries with each frame of primary values so as to determine a starting point and a terminal point of a voice. The identification method disclosed in TWN490655 further employs a Princen-Bradley filter to convert information of the voice into corresponding patterns of sound spectrums. Finally, the patterns of the sound spectrums are compared with predetermined reference specimens of storage in identifying the voiceprint of the phone user.

Briefly, the identification method disclosed in TWN490655 must calculate degrees of matches and distances of gaps for the patterns of sound spectrums. A user can pass the voiceprint identification if the calculated distance of gaps does not exceed in the boundaries. However, there is a need for calculating distances between the reference specimens and the test specimens when the identification method calculates degrees of matches and distances of gaps for the patterns of sound spectrums. In fact, the reference specimens may unavoidably occupy a greater space of database that necessitates a large space for storage. The identification method therefore requires not only a larger database space for storage but also a longer time for transmitting data. There is a drawback of extending time if the voiceprint identification method is directly applied to e-commerce.

Hence, there is a need for improving the reference specimens in occupation of the space so as to save occupied spaces in the database by the reference specimens that can avoid a limit of a number of users. Diminishing bits of the reference specimens can speed up the time for voiceprint identification so as to increase a successful rate of identification. Consequently, a transaction time can be reduced if the technology of the voiceprint identification is applied to e-commerce transaction.

The present invention intends to provide a voiceprint identification system in transacting e-commerce for identifying users. The voiceprint identification system combines Gauss Probability Distribution, Dynamic Time Warping Algorithm and Hidden Marko Model, and further employs Viterbi Algorithm to obtain a maximum similar path so as to calculate model parameters for the voiceprint identification system.

SUMMARY OF THE INVENTION

The primary objective of this invention is to provide a voiceprint identification system in transacting e-commerce for identifying users so as to increase an identification average by using such a voiceprint identification system.

The secondary objective of this invention is to provide the voiceprint identification system combining with Gauss Probability Distribution, Dynamic Time Warping Algorithm and Hidden Marko Model, and further employing Viterbi Algorithm to obtain a maximum similar path so as to calculate model parameters which may simplify training and testing processes of the voiceprint identification system.

A voiceprint identification method for transacting e-commerce in accordance with the present invention includes the steps of: accessing user's login via electronic communication means; an identification device recognizing a password; the identification device verifying voiceprint registration of users whether a voiceprint of the assessed user is registered; a voiceprint identification system identifying the assessed user's login or approving registration of a voiceprint of the user; and the voiceprint identification system determining the user to approve or disapprove in transacting e-commerce.

The voiceprint identification system for transacting e-commerce in accordance with the present invention comprises a front end-processing portion, a feature-retrieving portion, a training system and a testing system used to implement training or testing processes for input voice data. In training process, the training system employs the front end-processing portion to retrieve effective voice information from the input voice data for training, and further employs the feature-retrieving portion to retrieve effective voice features from the effective voice information. The voice features are calculated to obtain a maximum similar path for acting model parameters. In testing process, the testing system employs the front end-processing portion to retrieve effective voice information from the input voice data for testing, and further employs the feature-retrieving portion to retrieve effective voice features from the effective voice information. Calculations between the voice features and the model parameters are similar probabilities for outputting an identified result.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG. 1 is a flow chart of a voiceprint identification system for e-commerce in accordance with the present invention;
FIG. 2 is a block diagram of the voiceprint identification system for e-commerce in accordance with the present invention;
FIG. 3 is a chart illustrating states in relation to frames of the voiceprint identification system for e-commerce in accordance with the present invention;
FIG. 4 is a chart illustrating an initial distribution model of frames in relation to states of the voiceprint identification system for e-commerce in accordance with the present invention;
FIG. 5 is a schematic diagram of the voiceprint identification system in conversion of states in accordance with a preferred embodiment of the present invention;
FIG. 6 is a schematic diagram of the voiceprint identification system calculating a maximum similar path of states in accordance with the preferred embodiment of the present invention;
FIG. 7 is a schematic diagram of the voiceprint identification system equally dividing frames in accordance with the preferred embodiment of the present invention;
FIG. 8 is a schematic diagram of the voiceprint identification system redistributing frames in first redistribution step in accordance with the preferred embodiment of the present invention;

FIG. 9 is a schematic diagram of the voiceprint identification system redistributing frames in second redistribution step in accordance with the preferred embodiment of the present invention; and

FIG. 10 is a schematic diagram of the voiceprint identification system redistributing frames in optimum redistribution step in accordance with the preferred embodiment of the present invention.

DETAILED DESCRIPTION OF THE INVENTION

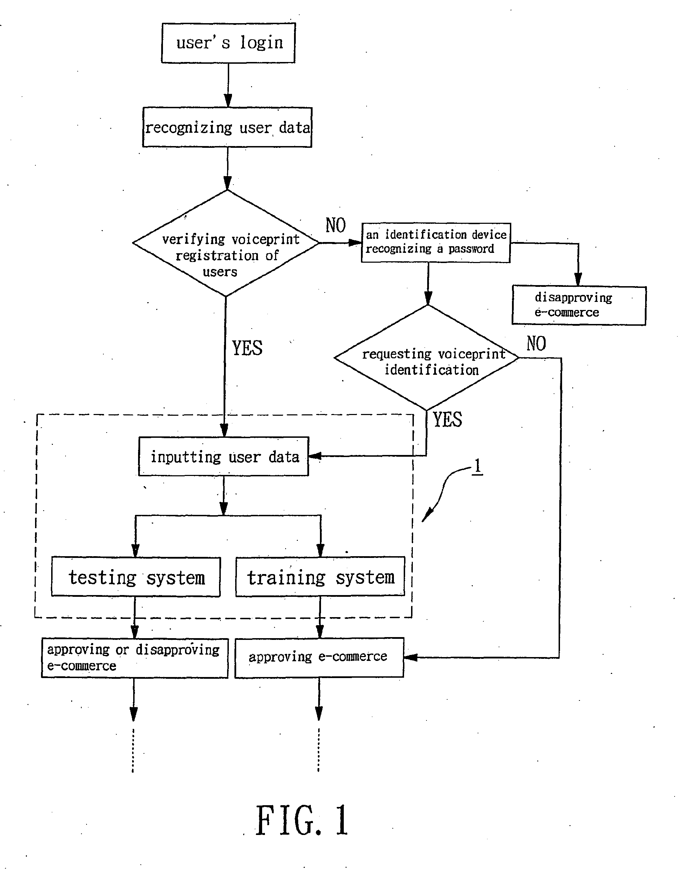

FIG. 1 shows a flow chart of a voiceprint identification system for e-commerce in accordance with the preferred embodiment of the present invention. Referring to FIG. 1, a user assesses to an e-commerce center via electronic communication means for transacting e-commerce when the voiceprint identification system permits transacting e-commerce. It will be understood that the electronic communication means may include a personal computer, an automatic teller machine, a credit card verifier and other contrivances, and may also be suitable for transacting ordinary commercial activities.

Still referring to FIG. 1, user's data are transmitted to a voiceprint identification center which is selectively located in a special commercial center, a financial institution and a special managerial institution. The voiceprint identification center employs an identification device in verifying user's data, and the identification device includes a programmable identification logic circuit. In the illustrated embodiment, the voiceprint identification system may be deployed and installed in the voiceprint identification center.

Still referring to FIG. 1, the identification device may verify voiceprint registration of users whether a voiceprint of the assessed user is registered. The result appears a need of processing voiceprint identification for the accessed user. Once occurred, the voiceprint identification center may transmit the result of the voiceprint registration to the electronic communication means of the user for transacting e-commerce.

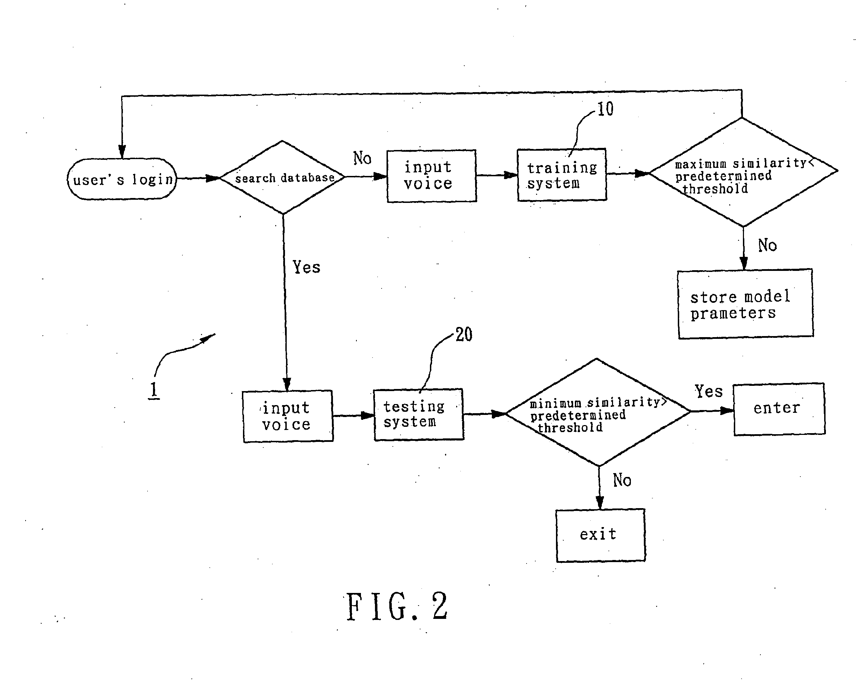

Turning now to FIG. 2, a block diagram of the voiceprint identification system for e-commerce in accordance with the preferred embodiment of the present invention is showed.

Still referring to FIG. 2, the voiceprint identification system 1 includes a training system 10 used to train the voiceprint identification system for registering speech voice of the accessed user in training process, and a testing system 20 used to identify speech voice of the accessed user in identifying process. In the preferred embodiment, the voiceprint identification system 1 may further include a front end-processing portion, a feature-retrieving portion, a memory portion and an operation portion. The front end-processing portion and the feature-retrieving portion are operated to process the speech voice and thus retrieve voice features thereof for the training system 10 and the testing system 20. The memory portion is functioned to store the voice features of the speech voice of the accessed user transmitting from training system 10 and the testing system 20. The operation portion is functioned to calculate features of the registered voice data and the voice features of the speech voice of the accessed user for voiceprint identification.

The voiceprint identification system 1 may recognize the accessed user if user's login is inputted. In recognizing process, the voiceprint identification system 1 verifies voiceprint registration of the accessed user in a voiceprint database whether a voiceprint of the assessed user has already registered. In the preferred embodiment, the voiceprint identification system 1 may require a training process for registering voiceprint of the accessed user by the training system 10 if no voiceprint registration has verified. Conversely, the voiceprint identification system 1 may require a testing process for identifying voiceprint of the accessed user by the testing system 20 if a voiceprint registration has already verified. Accordingly, the voice features of the accessed user can be identified with those of the registered voiceprint.

Still referring to FIGS. 1 and 2, in the preferred embodiment, the voiceprint identification system 1 may request a password of the accessed user if no voiceprint registration has verified. The accessed user cannot transact e-commerce if no response or an incorrect password is given. The accessed user may be requested a voiceprint registration if a correct password is given. The accessed user may be approved for transacting e-commerce if a voiceprint registration is disagreed or refused. Conversely, if a voiceprint registration is agreed, the voiceprint identification system 1 may execute the procedure for operating the training system 10. The voiceprint identification system 1 of the present invention may manipulate the procedure of the training system 10 for registering voiceprint of the accessed user as described more fully below.

Before retrieving the voice features, the front-end processing portion retrieves the effective voice data from the raw voice data and filters ineffective voice data. Short-energy and zero-crossing rate are employed in the present invention for detection purposes. In the present invention, a calculating method combining Gauss possibility distribution is employed, and the equation is as follows:

$$b_i(\overline{x}) = \frac{1}{(2\pi)^{D/2}|\Sigma_i|^{1/2}} \exp\left\{-\frac{1}{2}(\vec{x}-\overline{u_i})'\Sigma_i^{-1}(\vec{x}-\overline{u_i})\right\} \qquad (1)$$

wherein $\overline{x}$ is the original signal that is divided into a plurality of frames in D-dimension, $b_i(\overline{x})$ is the possibility while i = 1,..., M, $\overline{u}_i$ is the expectation value of the background noise signal, and $\Sigma_i$ is the variance of the background noise signal.

Since D in $\dfrac{1}{(2\pi)^{D/2}}$ is certain (D=256 in this case), it is neglected, and equation (1) is simplified and rewritten as follows:

$$b_i(\overline{x}) = \frac{1}{|\Sigma_i|^{1/2}} \exp\left\{-\frac{1}{2}(\vec{x}-\overline{u_i})'\Sigma_i^{-1}(\vec{x}-\overline{u_i})\right\} \qquad (2)$$

The exponential calculation may be too large. The equation (2) is therefore simplified and rewritten into equation (3) after obtaining its logarithm.

$$b_i(\overline{x}) = \ln\left(\frac{1}{|\Sigma_i|^{1/2}} \exp\left\{-\frac{1}{2}(\vec{x}-\overline{u_i})'\Sigma_i^{-1}(\vec{x}-\overline{u_i})\right\}\right)$$

$$= \ln\frac{1}{|\Sigma_i|^{1/2}} - \frac{1}{2}(\vec{x}-\overline{u_i})'\Sigma_i^{-1}(\vec{x}-\overline{u_i})$$

$$b_i(\overline{x}) = \left(-\frac{1}{2}\right)\ln|\Sigma_i| - \frac{1}{2}(\vec{x}-\overline{u_i})'\Sigma_i^{-1}(\vec{x}-\overline{u_i}) \qquad (3)$$

The first 256 points of the front portion of the raw voice data are extracted to calculate the expectation value, variance of the short-energy and zero-crossing. The two values and the raw voice data are substituted into equation (3) for calculation purposes. Since the distributive possibility area of the short-energy and zero-crossing includes effective voice data and ineffective voice data, the ineffective voice data is removed to reduce the amount of data while allowing correct retrieval of the effective voice data.

When retrieving voice features by the feature-retrieving portion, two parameters for identifying voice features are used in the present invention. The parameters include linear predictive coding (LPC) and Mel frequency cepstral coefficient (MFCC). Each of the parameters includes twelve (12) cepstral coefficients and twelve (12) delta-cepstral coefficients. Equation (4) is obtained after carrying out partial differentiation on the cepstral coefficients with respect to time:

$$\Delta c_n(t) = \frac{\partial c_n(t)}{\partial t} = \frac{\displaystyle\sum_{k=-K}^{K} k c_n(t+k)}{\displaystyle\sum_{k=-K}^{K} k^2} \qquad (4)$$

wherein K is the number of considered frames.

The equation (4) is too complicated and thus simplified to merely consider two anterior frames and two posterior frames, obtaining the following equations (5)-(9):

$$\Delta C_n^0 = [2 * C(2,n) + C(1,n)]/5 \qquad (5)$$

$$\Delta C_n^1 = [2 * C(3,n) + C(2,n) - C(0,n)]/6 \qquad (6)$$

$$\Delta C_n^i = [2 * C(i+2,n) + C(i+1,n) - C(i-1,n) - 2 * C(i-2,n)]/10 \qquad (7)$$

$$\Delta C_n^{L-2} = [C(L-1,n) - C(L-3,n) - 2 * C(L-4,n)]/6 \qquad (8)$$

$$\Delta C_n^{L-1} = [-C(L-2,n) - 2 * C(L-3,n)]/5 \qquad (9)$$

wherein Cn is the feature value in n-th order, L is the total number of the frames in the signal, and i is the serial number of the frames.

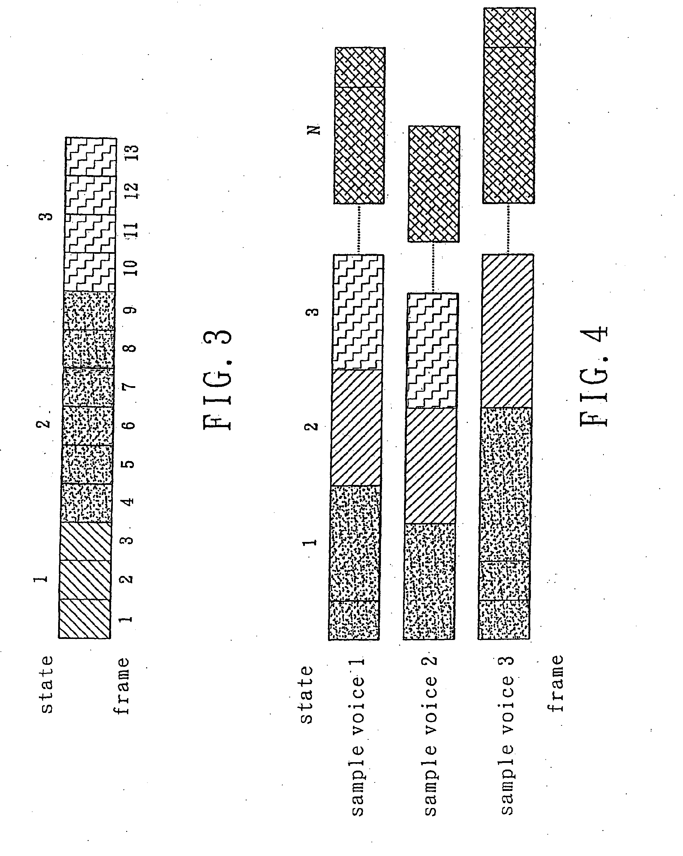

Turning now to FIG. 3, a chart illustrating states in relation to frames of the voiceprint identification system for e-commerce in accordance with the present invention is shown.

In training process, the term "state" means varying in the mouth shape and the vocal band. Generally, a speaker's mouth may change in shape while speaking. Thus, each state represents changes in the voice features. In some cases, a single sound contains several states of the voice features. Unlike the frame, the respective state does not have a fixed size. A single state usually includes several or tens of the frames.

Referring now to FIG. 3, the first state including three frames, the second state including six frames, and the third state including four frames are defined.

Turning now to FIG. 4, a chart illustrating an initial distribution model of frames in relation to states of the voiceprint identification system for e-commerce in accordance with the present invention is shown. In the preferred embodiment, three sample voices equally divided in an initial distribution model are exemplified.

In the initial model that divides the voices for obtaining frames, the residual frame, if any, is halved and the result thereof is incorporated into the first state and the last state. Referring again to Fig. 4, three factors must be considered in the distribution model: (1) the first frame must belong to the first state, (2) the last frame must belong to the last state, and (3) the state in the frame either remains unchanged or the change of the state in the frame continues to the next one. Gauss distribution possibility is employed to calculate the possibility of each frame of each state, and Viterbi algorithm is employed to obtain the maximum similar path.

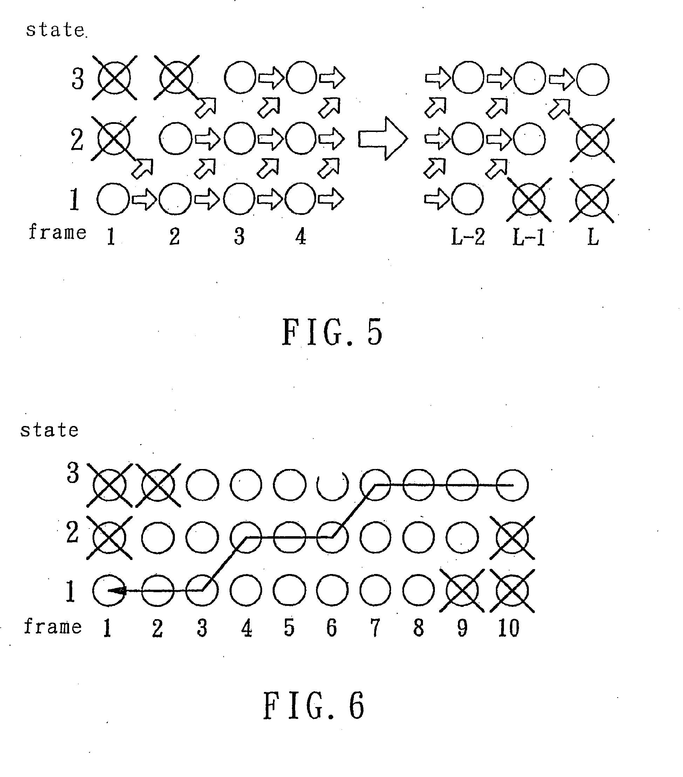

Turning now to FIG. 5, a schematic diagram of the voiceprint identification system in conversion of states in accordance with a preferred embodiment of the present invention is shown.

Referring to FIG. 5, the possible conversion of the states of frames (the number of which is L) is shown when three states is involved. The cross-marked frame is deemed as an impossible state, and the directions indicated by the arrows are the possible paths of the change of the states.

Turning now to FIG. 6, a schematic diagram of the voiceprint identification system calculating a maximum similar path of states in accordance with the preferred embodiment of the present invention is shown.

Referring to FIG. 6, in retrieving features, the maximum similar path includes a first state having the first, the second, and the third frames, a second state having the fourth, the fifth, and the sixth frames, and a third state having the seventh, the eight, the ninth, and the tenth frames.

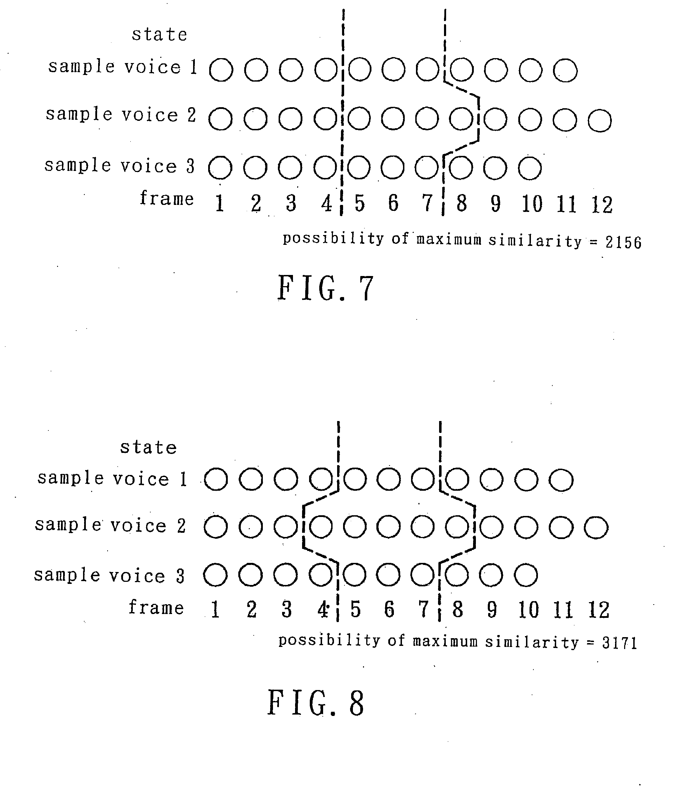

Turning now to FIG. 7, a schematic diagram of the voiceprint identification system equally dividing frames in accordance with the preferred embodiment of the present invention is shown.

Referring to FIG. 7, initial models of three states of three sample voices are distributed after equal division. The first sample voice is divided into three states each having three frames, and two residual frames are halved and each incorporated into the first state and the second state respectively. The second sample voice is divided into three statuses each having four frames. The third sample voice is divided into three statuses each having three frames, and the residual frame is added into the first state. After calculation, the possibility of maximum similarity is 2157.

Turning now to FIG. 8, a schematic diagram of the voiceprint identification system redistributing frames in first redistribution step in accordance with the preferred embodiment of the present invention is shown.

Referring to FIG. 8, the possibility of maximum similarity is increased to 3171 after the first redistribution.

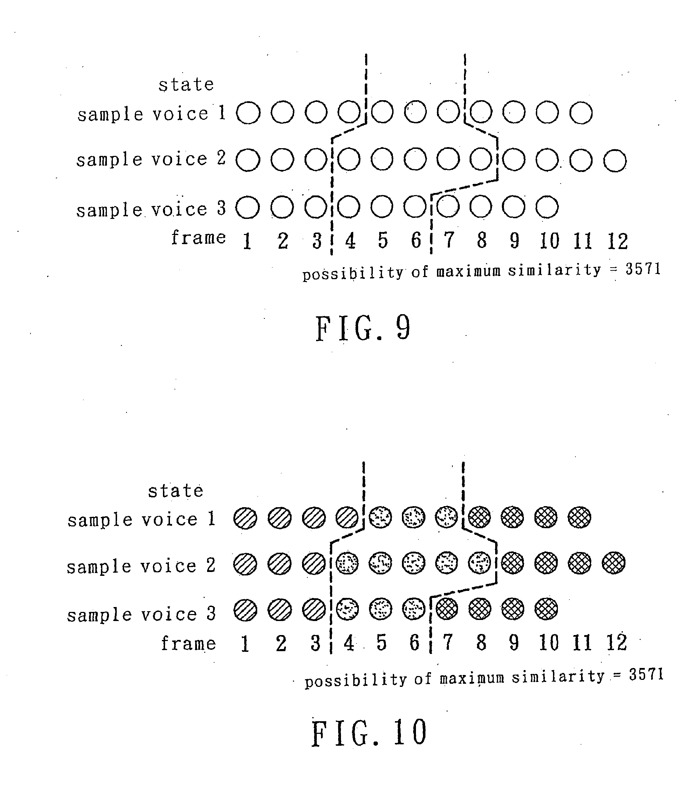

Turning now to FIG. 9, a schematic diagram of the voiceprint identification system redistributing frames in second redistribution step in accordance with the preferred embodiment of the present invention is shown.

Referring to FIG. 9, the possibility maximum similarity is increased to 3571 after the second redistribution.

Turning now to FIG. 10, a schematic diagram of the voiceprint identification system redistributing frames in optimum redistribution step in accordance with the preferred embodiment of the present invention is shown.

Referring to FIG. 10, the possibility of maximum similarity is not increased after the third distribution. Thus, it can be deemed as the most optimal frame distribution. The expectation value and the variance of each state are calculated to obtain the model parameters that can be stored in the voiceprint database.

Referring back to FIG. 2, when proceeding the training system 10 with training raw voice data, equations (1)-(9) are calculated to obtain the effective training voice features. Viterbi algorithm is then employed to obtain the maximum similar path. Next, the expectation value and variance of each state are calculated to obtain the model parameters, thereby completing the voice training process. When the possibility of maximum similarity is smaller than a predetermined threshold, the training process is terminated and the accessed user cannot pass the training process. Therefore, the training process of the voiceprint identification system 1 must be retried for voiceprint registration.

Conversely, when the possibility of maximum similarity is greater than a predetermined threshold, the training process is terminated and the accessed user passes the training process. The model parameters are stored in the voiceprint identification system 1 and the voiceprint identification is succeeded in registration. Referring back to FIG. 1, the accessed user can transact e-commerce when the voiceprint identification has succeeded in registration.

Referring again to FIGS. 1 and 2, a testing process of the testing system 20 is required if the user's voiceprint identification is registered. Similarly, when proceeding the testing system 20 with testing voiceprint data, equations (1)-(9) are used to obtain effective testing voice features.

Still referring to FIG. 2, the possibility of similarity between the testing voice features and the model parameters are calculated to obtain the identification result. In voiceprint identification, when the possibility of minimum similarity is greater than a predetermined threshold, the accessed user passes the voiceprint identification that permits exiting the voiceprint identification system 1 and transacting e-commerce. Conversely, when the possibility of minimum similarity is greater than the predetermined threshold, the testing process is terminated and the accessed user cannot pass the voiceprint identification of the voiceprint identification system 1. Therefore, the accessed user must quit the voiceprint identification of the voiceprint identification system 1 since the voiceprint identification system 1 refuses to transact e-commerce.

Still referring to FIGS. 1 and 2, finally, the identification device may approve or disapprove transacting e-commerce according to the identification result of the testing system 20 of the voiceprint identification system 1.

Although the invention has been described in detail with reference to its presently preferred embodiment, it will be understood by one of ordinary skill in the art that various modifications can be made without departing from the spirit and the scope of the invention, as set forth in the appended claims.

## Claims

**1.** A voiceprint identification method, comprising:

accessing user's login via electronic communication means;
an identification device recognizing user data;
the identification device verifying voiceprint registration of users whether a voiceprint of the assessed user is registered;
a voiceprint identification system identifying the assessed user's login; and
the voiceprint identification system determining the accessed user to approve or disapprove in transacting e-commerce.

**2.** The voiceprint identification method as defined in claim 1, wherein the voiceprint identification system comprising:

a front-end processing portion for carrying out front-end processing on raw voice data input into the voiceprint identification system that separates effective voice data from ineffective voice data, the front-end processing portion then retrieving the effective voice data;

a feature-retrieving portion for retrieving voice features from the effective voice data;

a memory portion for storing the voice features; and

an operational portion for carrying out calculation on the voice features stored in the storage portion and features of a voice input into the voiceprint identification system.

3. The voiceprint identification method as defined in claim 2, comprising a training system that employs the front-end processing portion and the feature-retrieving portion to obtain model parameters of the raw voice data.

4. The voiceprint identification method as defined in claim 3, wherein the training system employs Viterbi algorithm obtain a maximum similar path for calculating the model parameters to be stored.

5. The voiceprint identification method as defined in claim 1, wherein further comprising a testing system that employs the front-end processing portion and the feature-retrieving portion to obtain the features of the raw voice data.

6. The voiceprint identification method as defined in claim 1, wherein when no voiceprint identification of the assessed user is registered, the voiceprint identification system requires recognizing a password.

7. The voiceprint identification method as defined in claim 6, wherein when the accessed user inputs a correct password, the voiceprint identification system requires processing a training system for registering voiceprint identification.

```
                        ┌──────────────────┐
                        │   user's login   │
                        └──────────────────┘
                                 │
                                 ▼
                     ┌──────────────────────┐
                     │ recognizing user data│
                     └──────────────────────┘
                                 │
                                 ▼
                              ╱──────╲        NO   ┌────────────────────────┐
                            ╱ verifying ╲──────────▶│an identification device│
                           ⟨  voiceprint  ⟩         │recognizing a password  │
                            ╲ registration ╱        └────────────────────────┘
                              ╲ of users ╱                │            │
                                ╲──────╱                  │            ▼
                                   │                      │      ┌─────────────┐
                                  YES                     │      │ disapproving│
                                   │                      │      │ e-commerce  │
                                   │                      ▼      └─────────────┘
                                   │                   ╱──────╲      NO
                                   │                 ╱requesting╲──────────┐
                                   │                ⟨ voiceprint  ⟩        │
                                   │                 ╲identification╱      │
                                   │                   ╲──────╱            │
                                   │                      │                │
           ┌───────────────────────┼──────────────────┐ YES               │
           │                       ▼                   │                   │
           │           ┌──────────────────────┐◀───────┼───────────────────┘
           │           │  inputting user data │       │        ╭── 1
           │           └──────────────────────┘       │
           │                       │                   │
           │              ┌────────┴────────┐          │
           │              ▼                 ▼          │
           │    ┌─────────────────┐ ┌─────────────────┐│
           │    │ testing system  │ │ training system ││
           │    └─────────────────┘ └─────────────────┘│
           └──────────┼──────────────────────┼─────────┘
                      ▼                       ▼
          ┌────────────────────────┐ ┌────────────────────┐
          │ approving or disapproving│ │ approving e-commerce│◀──────
          │ e-commerce             │ └────────────────────┘
          └────────────────────────┘
                      │                       │
                      ▼                       ▼
                      ⋮                       ⋮
```

# FIG. 1

FIG. 2

state 1 2 3

frame 1 2 3 4 5 6 7 8 9 10 11 12 13

## FIG. 3

state 1 2 3 N

sample voice 1

sample voice 2

sample voice 3

frame

## FIG. 4

state

FIG. 5

state

FIG. 6

state

sample voice 1 ○ ○ ○ ○ ○ ○ ○ ○ ○ ○ ○

sample voice 2 ○ ○ ○ ○ ○ ○ ○ ○ ○ ○ ○

sample voice 3 ○ ○ ○ ○ ○ ○ ○ ○ ○ ○

frame 　1　2　3　4　5　6　7　8　9　10　11　12

possibility of maximum similarity = 2156

# FIG. 7

state

sample voice 1 ○ ○ ○ ○ ○ ○ ○ ○ ○ ○ ○

sample voice 2 ○ ○ ○ ○ ○ ○ ○ ○ ○ ○ ○

sample voice 3 ○ ○ ○ ○ ○ ○ ○ ○ ○ ○

frame 　1　2　3　4　5　6　7　8　9　10　11　12

possibility of maximum similarity = 3171

# FIG. 8

state

sample voice 1 ◯ ◯ ◯ ◯ ◯ ◯ ◯ ◯ ◯ ◯

sample voice 2 ◯ ◯ ◯ ◯ ◯ ◯ ◯ ◯ ◯ ◯

sample voice 3 ◯ ◯ ◯ ◯ ◯ ◯ ◯ ◯ ◯

frame   1   2   3   4   5   6   7   8   9   10   11   12

possibility of maximum similarity = 3571

## FIG. 9

state

sample voice 1 ▨ ▨ ▨ ▨ ▧ ▧ ▧ ▩ ▩ ▩ ▩

sample voice 2 ▨ ▨ ▨ ▧ ▧ ▧ ▧ ▧ ▩ ▩ ▩ ▩

sample voice 3 ▨ ▨ ▨ ▧ ▧ ▧ ▩ ▩ ▩ ▩

frame   1   2   3   4   5   6   7   8   9   10   11   12

possibility of maximum similarity = 3571

## FIG. 10

**European Patent Office**

**EUROPEAN SEARCH REPORT**

Application Number

EP 05 00 6839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/67448 A (TELEFONAKTIEBOLAGET LM ERICSSON) 9 November 2000 (2000-11-09) | 1,5-7 | G10L17/00 |
| Y | * abstract; figure 3 * <br> * page 1, lines 10-13 * <br> * page 4, lines 20-22 * <br> ----- | 2-4 | |
| Y | US 6 519 563 B1 (LEE CHIN-HUI ET AL) 11 February 2003 (2003-02-11) <br> * abstract; figure 2 * <br> * column 8, lines 23-35,52-58 * <br> ----- | 2-4 | |
| X | WO 01/16940 A (ANDERSEN CONSULTING, LLP) 8 March 2001 (2001-03-08) <br> * abstract; figures 21,25,31 * <br> ----- | 1,5-7 | |
| A | US 5 848 388 A (POWER ET AL) 8 December 1998 (1998-12-08) <br> * abstract; figure 2 * <br> * column 13, lines 7-10 * <br> ----- | 1-7 | |

TECHNICAL FIELDS SEARCHED (IPC)

G10L

The present search report has been drawn up for all claims

| Place of search | Date of completion of the search | Examiner |
|---|---|---|
| The Hague | 5 January 2006 | Quélavoine, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 6839

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2006

| Patent document cited in search report | | | Publication date | Patent family member(s) | | Publication date |
|---|---|---|---|---|---|---|
| WO 0067448 | A | | 09-11-2000 | AU | 4443200 A | 17-11-2000 |
| | | | | NO | 992071 A | 30-10-2000 |
| US 6519563 | B1 | | 11-02-2003 | NONE | | |
| WO 0116940 | A | | 08-03-2001 | AU | 7115400 A | 26-03-2001 |
| | | | | TW | 548631 B | 21-08-2003 |
| US 5848388 | A | | 08-12-1998 | AU | 6433094 A | 11-10-1994 |
| | | | | CA | 2158849 A1 | 29-09-1994 |
| | | | | DE | 69421911 D1 | 05-01-2000 |
| | | | | DE | 69421911 T2 | 20-07-2000 |
| | | | | DE | 69432570 D1 | 28-05-2003 |
| | | | | DE | 69432570 T2 | 04-03-2004 |
| | | | | ES | 2141824 T3 | 01-04-2000 |
| | | | | WO | 9422131 A2 | 29-09-1994 |
| | | | | JP | 3691511 B2 | 07-09-2005 |
| | | | | JP | 8508108 T | 27-08-1996 |
| | | | | SG | 93215 A1 | 17-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 385416
- TW 550477

- TW 490655